(19)

Europäisches Patentamt
European Patent Office
Office européen des brevets

(11)  EP 2 840 673 A2

(12)  EUROPEAN PATENT APPLICATION

(43) Date of publication:
25.02.2015  Bulletin 2015/09

(51) Int Cl.:
$H02J\ 3/24$ (2006.01)          $H02J\ 3/18$ (2006.01)
$H02J\ 3/01$ (2006.01)

(21) Application number: 14173257.8

(22) Date of filing: 20.06.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 21.06.2013 US 201313923676

(71) Applicant: Hamilton Sundstrand Corporation
Charlotte, NC 28217 (US)

(72) Inventors:
• Rodriguez, Fernando
Manchester, CT Connecticut 06042 (US)

• Li, Ming
West Hartford, CT Connecticut 06110 (US)
• Shen, Miaosen
Vernon, CT Connecticut 06066 (US)
• Blasko, Vladimir
Avon, CT Connecticut 06001 (US)

(74) Representative: Hughes, Andrea Michelle
Dehns
St Bride's House
10 Salisbury Square
London EC4Y 8JD (GB)

(54)  **Systems for active damping device for stabilizing a power grid of active sources and loads**

(57)  Embodiments relate to systems for an active damping device for stabilizing a power grid of active sources and loads. In power system networks or grids which incorporate active power sources and active loads, such as motors, the output voltage transfer function can exhibit instabilities due to the presence of poles in the positive real portion (right hand side) of the complex plane. Those poles can induce uncontrolled ringing, oscillations, or other artifacts or instabilities. According to implementations, an active damping element can be introduced into the power system grid, which operates to drive the poles of the output transfer function to the negative real (left hand) portion of the complex plane. Output voltage and other parameters can thereby be stabilized. In implementations, the damping element can include an R-C network for DC output systems, or a controller including a voltage source inverter for AC output systems.

FIG. 2

EP 2 840 673 A2

## Description

Field

The present teachings relate to systems for an active damping device for stabilizing a power grid of active sources and loads, and more particularly, to platforms and techniques for providing a network of active sources and active loads with a damping element that acts to shift poles of the transfer function associated with the sources and loads to negative real portion of the complex plane, reducing or eliminating ringing, oscillations, or other instabilities.

## Background

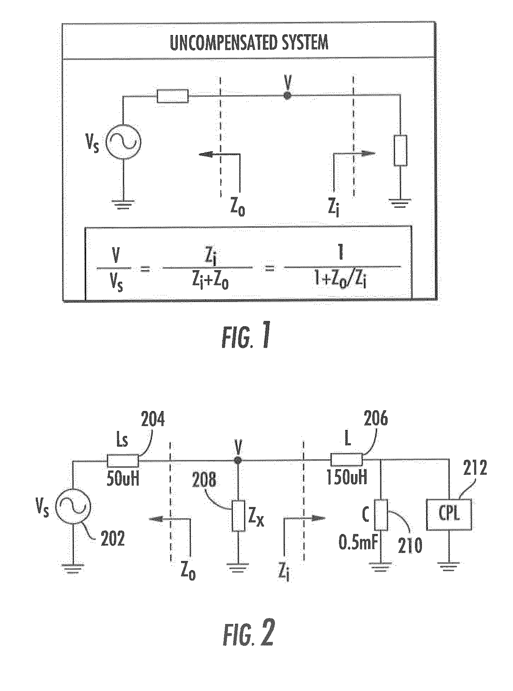

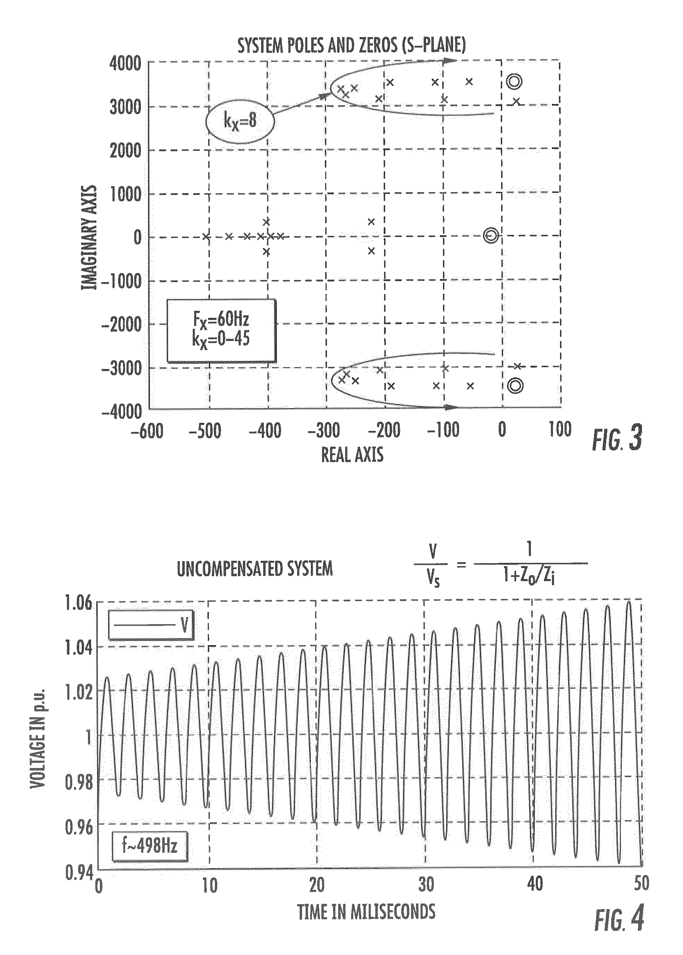

In the field of power systems, networks are known in which one or more active power supplies provide alternating current (AC) or other power to one or more active loads, such as electrical motors. When a grid consists of active source(s) and active load(s), it is possible that their controllers interact or excite system resonances around transfer function poles, resulting in system instability. An example of this type of system is shown in FIG. 1, and an illustration of the resulting instability is shown in FIG. 4.

To mitigate this set of problems, it has been known in power networks to provide power source and load regulators that can be adjusted (that is, tuned for slow dynamics) in order to avoid or prevent instability. More advanced systems which permit reduction or elimination of instabilities without resorting to regulators tuned to slower response would be advantageous.

## DESCRIPTION OF DRAWINGS

The accompanying drawings, which are incorporated in and constitute a part of this specification, illustrate embodiments of the present teachings and together with the description, serve to explain the principles of the present teachings. In the figures:

FIG. 1 illustrates an uncompensated power system, according to known power networks;
FIG. 2 illustrates a power network using an active damping device, according to various embodiments of the present teachings;
FIG. 3 illustrates the transfer function poles "x" and zeros "o" location on the complex s-plane as the extra element gain is varied;
FIG. 4 illustrates a voltage output chart illustrating a transfer function of an uncompensated power system;
FIG. 5 illustrates a voltage output graph illustrating a transfer function of a power system using an active damping device, according to aspects of the present teachings;
FIG. 6 illustrates an AC power network having an active damping device, according to further implementations of the present teachings;
FIG. 7 illustrates a voltage output chart illustrating a transfer function of an uncompensated AC power system; and
FIG. 8 illustrates a voltage output graph illustrating a transfer function of an AC power system using an active damping device, according to aspects of the present teachings.

## DESCRIPTION OF EMBODIMENTS

Embodiments of the present teachings relate to systems and methods for active damping device for stabilizing a power grid of active sources and loads. More particularly, embodiments relate to platforms and techniques for introducing an active damping device or network into a power system having active power sources and loads, which effectively repositions the poles of the transfer function of the system to the negative real portion of the complex plane, reducing or eliminating ringing and other instabilities.

Reference will now be made in detail to exemplary embodiments of the present teachings, which are illustrated in the accompanying drawings. Where possible the same reference numbers will be used throughout the drawings to refer to the same or like parts.

FIG. 2 illustrates an overall power system in which systems and methods for active damping device for stabilizing a power grid of active sources and loads can operate, according to aspects. In aspects as shown, a voltage source 202 can be coupled to an inductor 204 (labeled Ls), which in turn is coupled to an impedance element 208 and an inductor 206. The impedance element 208 can be coupled to ground, as shown. The inductor 206 can be coupled to a capacitor 210, and a constant power load 212, both of which as shown can also be coupled to ground. The constant power load 212 can be or include a resistor. According to embodiments as shown in FIG. 3, the voltage source 202 can be or include an alternating current (AC) source, and in which the power system is configured to provide direct current (DC) output power.

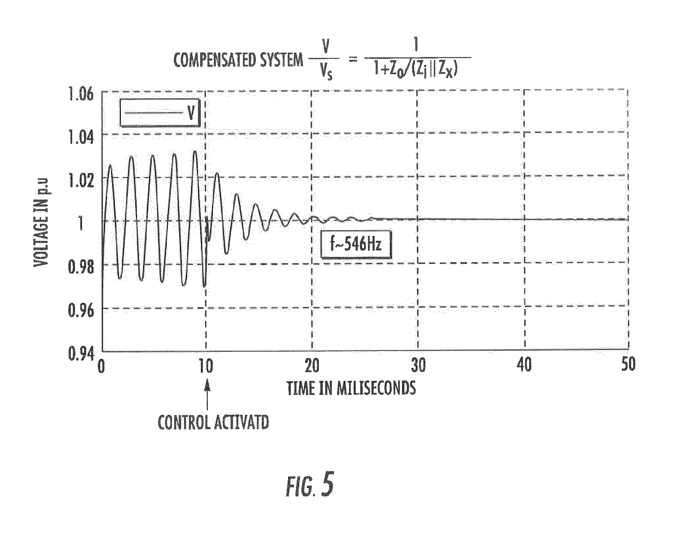

The power system of FIG. 2, if left in an uncompensated state (absence of "Zx"), can have an associated transfer function that contains right-hand poles (shown at "x" points in FIG. 3) which make it unstable. According to aspects, an active damping element 208, comprised of a series connected R-C network, can therefore as shown be added to the system. The introduction of those elements serves to stabilize the system: the closed loop poles ("x") are shifted to the negative real portion of the complex plane, or the left hand side as shown in FIG 3. FIGS. 4 and 5 show time domain simulations which verify that the uncompensated system (unstable) is compensated (stabilized) with the active damping device.

As shown in FIG. 3, the introduction of the damping element (Zx) 208 specifically alters the transfer function of the power system in the following ways:

■ $Z_x$: Extra element is added to shift poles towards left hand side of splane

$$\frac{V}{V_s} = \frac{1}{1 + Z_o/(Z_i \| Z_x)}$$

■ That element-consists of an R-C network in which:

■ $Z_x$-> R-C branch
■

$$Z_x = R_x + 1/(C_x s)$$

■

$$Z_x = \frac{R_x C_x s + 1}{C_x s} = \frac{V}{i_x}$$

■

$$Y_x = \frac{i_x}{V} = \left(\frac{1}{R_x}\right) \frac{R_x C_x s}{R_x C_x s + 1} = k_x \frac{\tau_x s}{\tau_x s + 1}$$

+
The "extra element" is a high pass current filter that serves to provide active damping. $F_x = 60Hz$ where, $k_x = 1/(2? F_x)$ $k_x = 0 - 45$
$k_x$ = high frequency gain

Without the effects of the damping element as shown in FIG. 3, a transfer function of the power system would exhibit unstable, behavior as shown in FIG. 4, including unbounded ringing or oscillation. With the incorporation of the damping element as illustrated and characterized above, the transfer function of the power system exhibits behavior shown in FIG. 5, in which the compensation effects cause ringing or oscillation to dissipate within a relatively short interval, on the order of 15 milliseconds from time of activation of the damping device or network. It will be appreciated that the illustrated time frames and response times are merely illustrative, and others may be achieved in the same or other power system configurations.

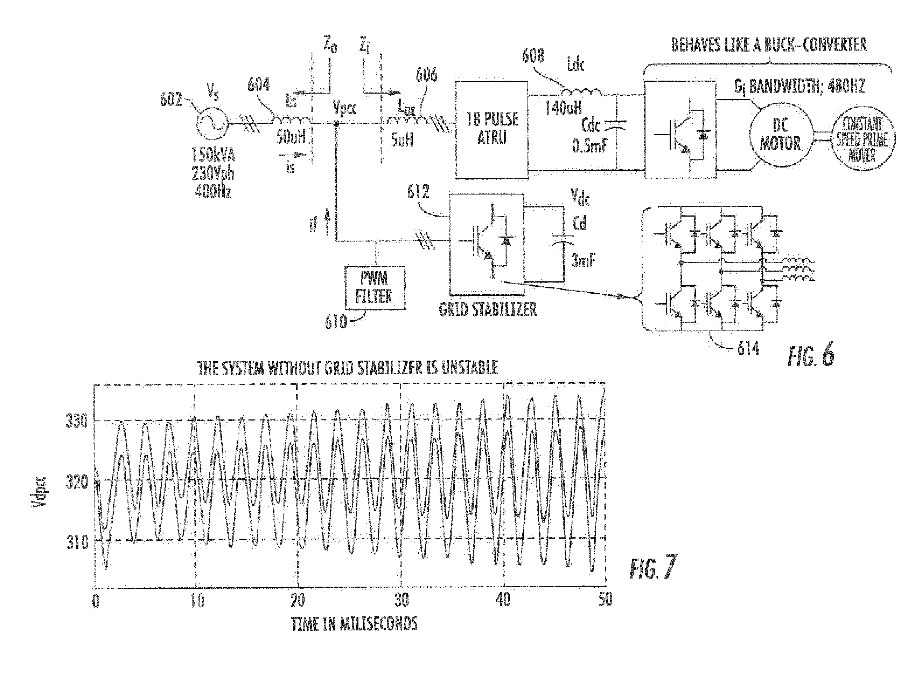

According to implementations shown in FIG. 6, a damping element designed to reduce or eliminated instabilities can also be incorporated in a power system operating from a power source 602 to produce alternating current (AC) output power, rather than DC power. As shown, a power source 602, which can be or include an AC power source, can be connected to an inductor 604 (labeled Ls), which in turn can be coupled to an inductor 606 (labeled Lac). The inductor 606 can be connected via a transformer rectifier unit (TRU) to a network 608, including capacitive and inductive elements, and a set of elements including a DC motor functioning as a buck-converter.

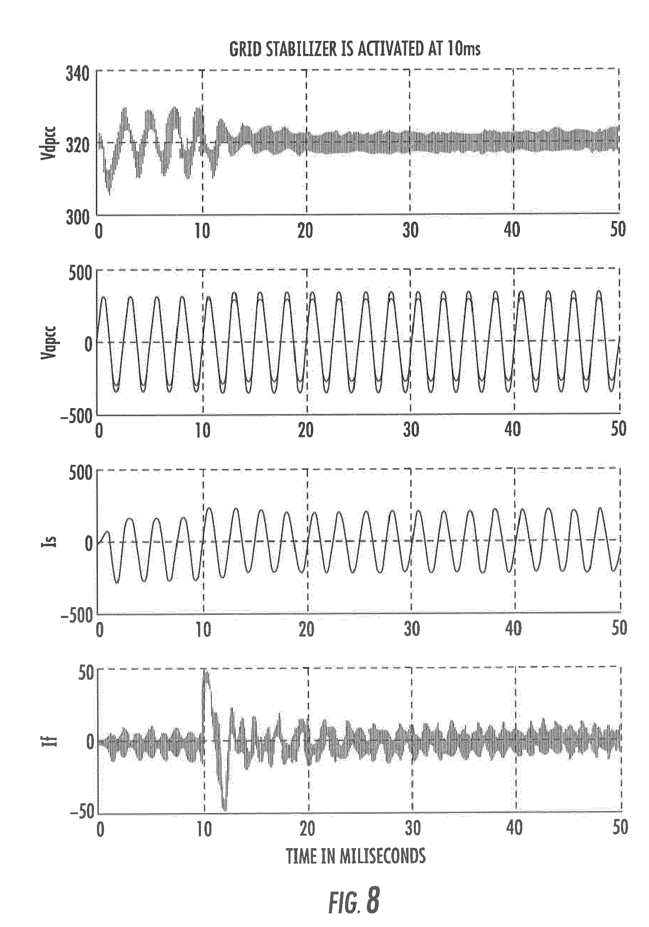

The inductor 604 can likewise be coupled to a pulse width modulation (PWM) filter 610, which in turn is connected to a grid stabilizer 614. The grid stabilizer 614 can in turn be connected to an output stage 614, which can be or include a three-phase output stage. In contrast to the implementation shown in FIG. 3, in the implementation shown in FIG. 6, the grid stabilizer 612 can be realized using a voltage source inverter, which in aspects emulates a controlled admittance incorporating a high pass current filter. The control can be applied to the d-axis in the synchronous reference frame. As shown in FIG. 7, the system of FIG. 6 without the use of a damping device in the form of grid stabilizer 612 would produce an unstable output, including again uncontrolled or unbounded ringing or oscillation. With the introduction and activation of the grid stabilizer 612, in contrast, the transfer function of the power system can behave as shown in FIG. 8, in which once more stability in the voltage output is achieved in a relatively short time frame after activation, on the order of 10 milliseconds or less. The time frames, response times and other parameters shown are, again, merely illustrative.

The foregoing description is illustrative, and variations in configuration and implementation may occur to persons skilled in the art. For example, while embodiments have been described in which one effective damping device or network is incorporated in a power system network, in implementations, two or more damping devices or networks can be combined to achieve the same or similar effects. Similarly, while implementations have been shown which include one power source and one power output, in implementations, more than one power source and/or more than out power output or power output stage can be used. Other resources described as singular or integrated can in embodiments be plural or distributed, and resources described as multiple or distributed can in embodiments be combined. The scope of the present teachings is accordingly intended to be limited only by the following claims.

**Claims**

1. A system, comprising:

   a first connection to an active power source (202);
   a second connection to an active load (212); and
   a damping element, connected to the active power source via the first connection and to the active load via the second connection, the damping element comprising a high-pass current filter configured to shift closed-loop poles of a transfer function for a network comprising the active power source and active load from a positive real value in the complex plane to a negative real value in the complex plane.

2. The system of claim 1, wherein the active power source comprises a direct current (DC) power source.

3. The system of claim 2, wherein the damping element comprises a high-pass current filter.

4. The system of claim 3, wherein the high-pass current filter comprises a resistive-capacitive network.

5. The system of claim 1, wherein the active power source comprises an alternating current (AC) power source.

6. The system of claim 5, wherein the damping element comprises a voltage source inverter.

7. The system of claim 6, wherein the AC power source comprises a three-phase power source.

8. The system of claim 1, wherein the active load comprises a motor.

9. The system of claim 1, wherein an oscillation of the transfer function decays to zero after activation of the damping element.

10. The system of claim 1, wherein the shifting of the poles produces stability in the network without adjusting a control of the active power source or active load.

## UNCOMPENSATED SYSTEM

$V_s$

$Z_0$

$Z_i$

$$\frac{V}{V_s} = \frac{Z_i}{Z_i+Z_0} = \frac{1}{1+Z_0/Z_i}$$

*FIG.* 1

204

$L_s$

50uH

$V_s$

202

$Z_0$

208

V

$Z_x$

$Z_i$

206

L

150uH

C

0.5mF

210

212

CPL

*FIG.* 2

SYSTEM POLES AND ZEROS (S-PLANE)

$k_X=8$

$F_X=60Hz$
$k_X=0-45$

IMAGINARY AXIS

REAL AXIS

*FIG. 3*

UNCOMPENSATED SYSTEM

$$\frac{V}{V_s} = \frac{1}{1+Z_0/Z_i}$$

V

$f\sim498Hz$

VOLTAGE IN p.u.

TIME IN MILISECONDS

*FIG. 4*

6

COMPENSATED SYSTEM $\dfrac{V}{V_S} = \dfrac{1}{1+Z_0/(Z_i \| Z_X)}$

*FIG.* 5

BEHAVES LIKE A BUCK-CONVERTER

FIG. 6

THE SYSTEM WITHOUT GRID STABILIZER IS UNSTABLE

FIG. 7

TIME IN MILISECONDS

EP 2 840 673 A2

GRID STABILIZER IS ACTIVATED AT 10ms

TIME IN MILISECONDS

FIG. 8